# EUROPEAN PATENT APPLICATION

(11) **EP 3 502 996 A1**
(43) Date of publication of application: **26.06.2019**
(21) Application number: 17210218.8
(22) Date of filing: 22.12.2017
(51) Int. Cl.: G06Q 20/34, G06Q 40/02

(54) **DIGITIZATION OF A SHAREABLE JAR OF MONEY**

(71) Applicant: MasterCard International Incorporated, Purchase NY New York 10577-2509 (US)
(72) Inventor: Abou El Enin, Mohamed, 1160 Brussles (BE); Hay, Florent, 1090 Jette (BE); Komolafe, Isaac, 3000 Leuven (BE); Sawkar, Dhaval, 1150 Woluwe Saint Pierre (BE)
(74) Representative: Murgitroyd & Company

(57) **Abstract**

In cultures with a high degree of digitization, the value of money is no longer evident to consumers because bank accounts become increasingly virtual. With the emergence of cryptocurrencies, like Bitcoin, the situation gets worse because no physical equivalent exists for these "coins".

An improved computer-implemented method for a group of people to share funds over an extended period of time is provided comprising establishing a buffer fund through an Issuer; the Issuer authorizing a Fund Manager to manage the buffer fund within the Issuer-defined settings; the Fund Manager being authorized to independently authorize Purchasers to make payments from the buffer fund; the Fund Manager independently issuing one or more virtual identification devices to each Purchaser; each Purchaser being authorized to make payments; and the Fund Manager further ensuring that the amount of money in the buffer fund for a pre-determined period remains within an upper and lower money setting.

The Fund Manager enjoys a high degree of independence from the Issuer due to the authorization by the Issuer. Each Purchaser enjoys a high degree of independence from the Fund Manager due to the authorization by the Fund Manager. In this way, management of the fund is shared with all Purchasers having some responsibility to monitor their own purchases to avoid adversely affecting any of the other Purchasers. It is this shared responsibility which contributes to learning about money.

## Description

### FIELD

The present disclosure relates to a shared management method for a shared buffer fund.

### BACKGROUND

In cultures and generations where payments are traditionally mainly made with cash, family heads often filled a jar with money at regular intervals or time periods, usually every month to match the typical wage cycle, to control expenditure. During this time period, each member of the family could take what they needed from this jar for their individual purchases. At the end of the time period, family heads could manage the jar contents - by analyzing the remaining money in the jar, and comparing details on further additions of money into the jar and the money spent by each family member, the monthly family expenditure may be determined, and appropriate adjustments may be made for the next time period.

This family jar system offered an attractive way to track family expenses on a regular basis, such as monthly. It also helps children learn about the value of money because it was visual and tangible - for example, when the jar was almost empty, no unnecessary purchases should be made and when the jar was empty, no purchases at all could be made. Unfortunately, it is difficult to track the purchases on a day-to-day basis, and it is not always clear which member of the family used which amount of money and for which goods or services. Record-keeping is dependent on the recollections and honesty of the family members. In addition, there were no hard restrictions on how, and how much, of the money may be consumed except for practical ones - the use of cash means that purchases were only made by actually visiting a merchant, usually at a location close-by.

In cultures with a high degree of digitization, the value of money is no longer evident to consumers because bank accounts become increasingly virtual. With the emergence of cryptocurrencies, like Bitcoin, the situation gets worse because no physical equivalent exists for these "coins".

It is still possible to fill a jar with cash of an appropriate currency even in these highly-digitalized cultures, but because many purchases may only be made on-line, it is becoming increasingly difficult to do this. There are also safety issues with retaining a large amount of cash at home.

It is an object of the invention to provide an improved method for a group of people to share funds over an extended period of time.

### GENERAL STATEMENTS

According to a first aspect of the present disclosure, there is provided a computer-implemented method for shared management of a shared buffer fund of money, the method comprising: establishing the buffer fund through an Issuer having at least one inlet flow of money; storing Issuer-defined settings in an electronic fund management database, the Issuer being authorized to control the Issuer-defined settings; the Issuer authorizing a Fund Manager to manage the buffer fund within the Issuer-defined settings; storing Manager-defined settings in the fund management database, the Fund Manager being authorized to control the Manager-defined settings, including an inlet setting determining an amount for the at least one inlet flow of money into the buffer fund; the Fund Manager independently authorizing at least one Purchaser to make payments from the buffer fund; storing Manager-defined settings in the fund management database including an outlet limit for each Purchaser, the Fund Manager independently determining their associated maximum outlet flow of money from the buffer fund; storing Purchaser-defined settings in the fund management database, each Purchaser being authorized by the Fund Manager to control their associated Purchaser-defined settings, including an outlet setting per Purchaser determining their respective outlet flow of money from the buffer fund; the Fund Manager independently issuing one or more virtual identification devices to each Purchaser; the Fund Manager independently authorizing each Purchaser to make payments using their issued one or more virtual identification device within the Manager-defined settings for that Purchaser; and the Fund Manager further determining the inlet setting and the outlet limit for each Purchaser such that the amount of money in the buffer fund for a pre-determined period remains within an upper and lower money setting.

The Fund Manager enjoys a high degree of independence from the Issuer due to the authorization by the Issuer. Each Purchaser enjoys a high degree of independence from the Fund Manager due to the authorization by the Fund Manager. In this way, management of the fund is shared with all Purchasers having some responsibility to monitor their own purchases to avoid adversely affecting any of the other Purchasers. It is this shared responsibility which contributes to learning about money. Also completion of the transaction and/or payment is relatively quick because of this independence- at the time of the payment, it is not necessary for the Fund Manager to approve or authorize transactions and/or payments.

According to a further aspect of the current disclosure, the method further comprises: the Fund Manager independently authorizing at least one Purchaser as an Earner to make payments into the buffer fund; and storing Earner-defined settings in the fund management database, each Earner being authorized by the Fund Manager to control their associated Earner-defined settings, including an inlet setting per Earner determining their respective inlet flow of money into the buffer fund.

Each Earner enjoys a high degree of independence from the Fund Manager due to the authorization by the Fund Manager. In this way, management of the fund is shared with all Earners having some responsibility to monitor their own contributions to avoid the money in the fund getting too low, which may adversely affect the other Purchasers who may have to reduce their purchasing, and/or adversely affect other Earners who may have to increase their contributions. It is this shared responsibility which further contributes to learning about money.

According to a further aspect of the current disclosure, the method further comprises: selecting and/or predetermining one or more Manager-defined settings for checking during payment authorization by an active Purchaser; configuring the one or more Manager-defined settings in the virtual identification devices issued to the active Purchaser; determining during authorization that the payment is within said one or more Manager-defined settings for the active Purchaser; and authorizing the payment if it is within said one or more Manager-defined settings or not authorizing the payment if it is not within said one or more Manager-defined settings.

Configuring the Manager-defined settings for each Purchaser directly in the virtual ID device may be more flexible, allowing payments and transactions to be made using the available networks, and not just being restricted to the Issuer's network. This may be particularly useful when travelling.

### BRIEF DESCRIPTION OF THE DRAWINGS

Features and advantages of some embodiments of the present invention, and the manner in which the same are accomplished, will become more readily apparent upon consideration of the following detailed description of the invention taken in conjunction with the accompanying drawings, which illustrate preferred and exemplary embodiments and which are not necessarily drawn to scale, wherein:
FIG. 1 depicts a computer-implemented method for shared management of a shared buffer fund of money. For clarity, the method has been depicted in five overviews, FIG. 1A to FIG. IE;
FIG. 1A depicts the buffer fund with at least one inlet flow of money into the fund, at least one outlet flow of money, and the management roles;
FIG. 1B depicts some possible settings and limits which the buffer fund may have;
FIG. 1C and FIG. 1D depict the management responsibilities of the Fund Manager;
FIG. 1E depicts the management responsibilities of each Purchaser; and
FIG. 2 depicts a schematic view of the contents of a Fund Management Database.

### DETAILED DESCRIPTION

In the following detailed description, numerous non-limiting specific details are given to assist in understanding this disclosure. It will be obvious to a person skilled in the art that the method may be implemented on any type of standalone system or client-server compatible system containing any type of client, network, server, and database elements.

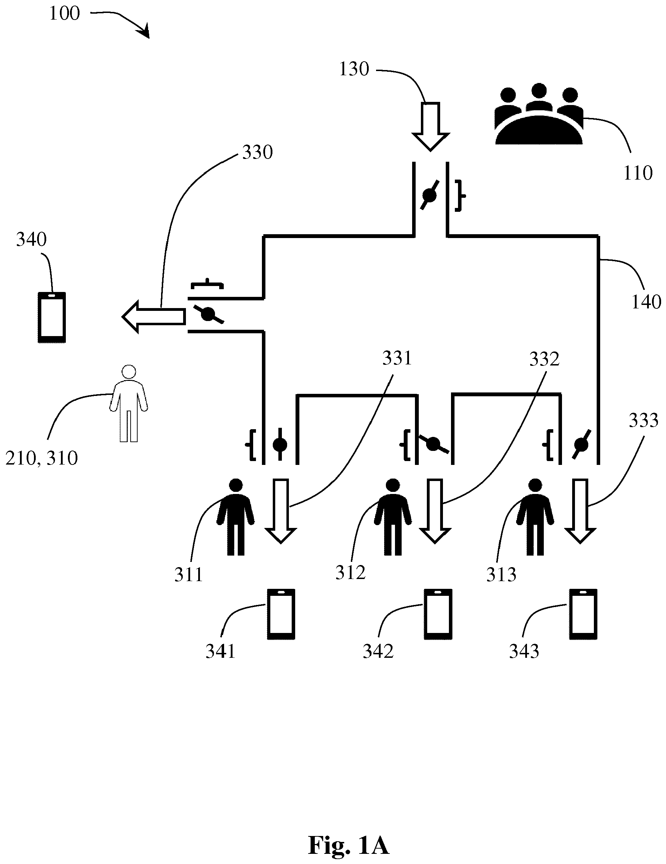

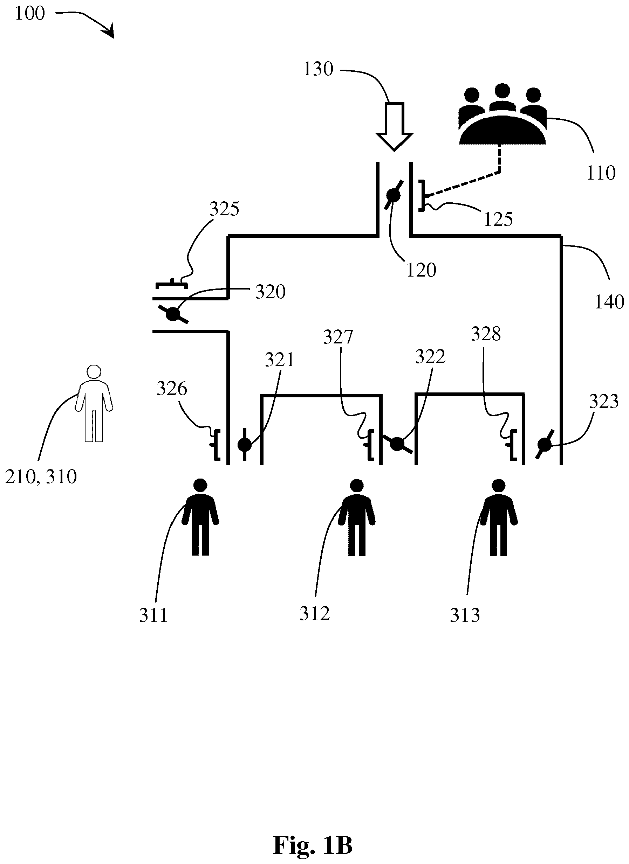

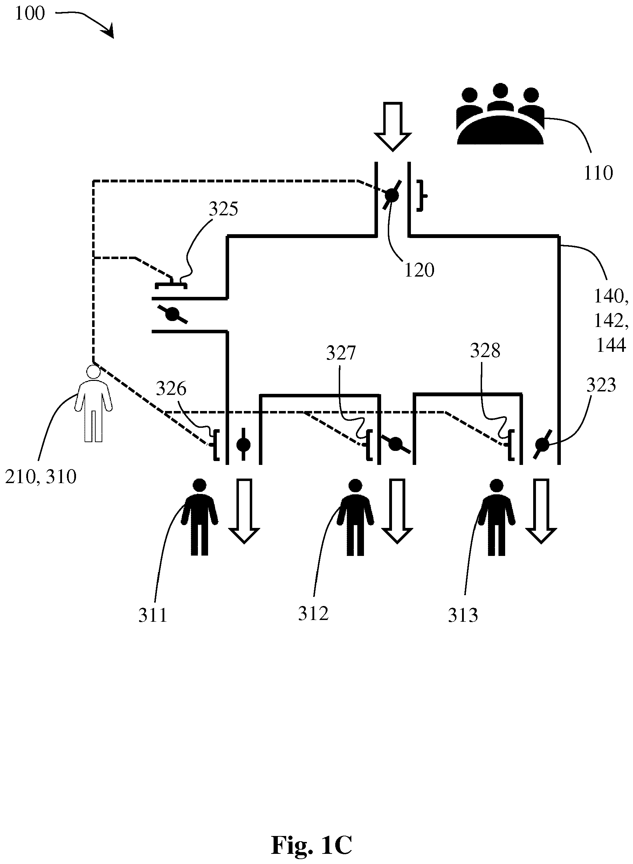

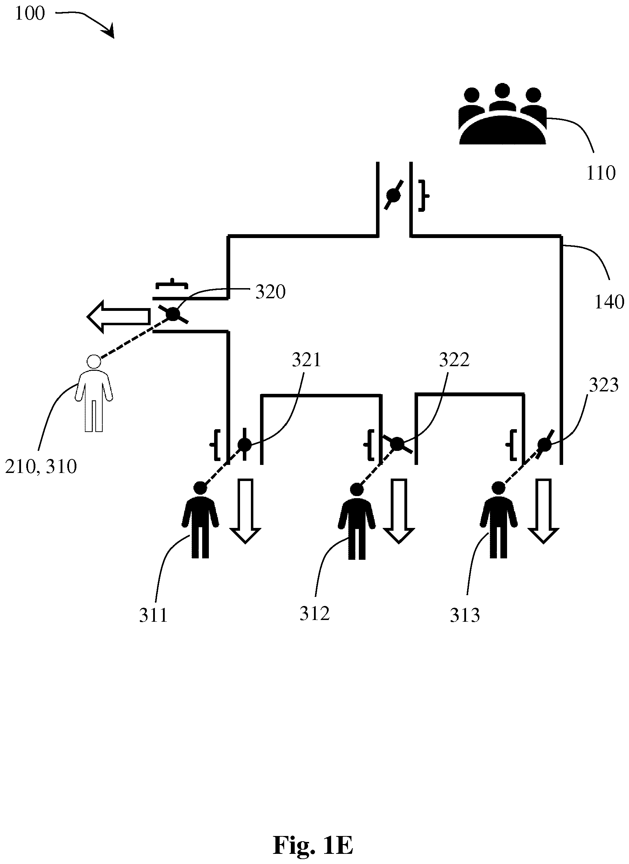

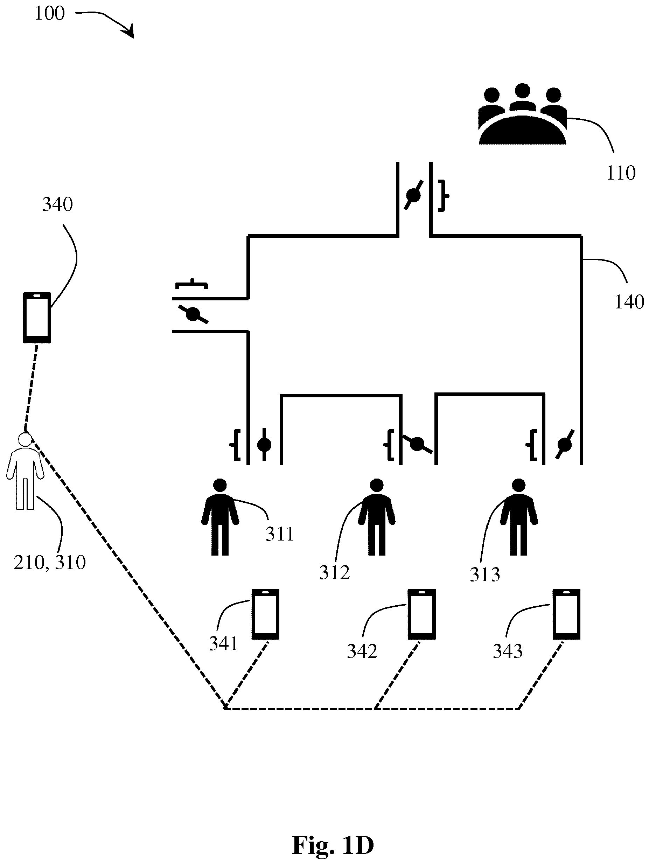

FIG. 1 depicts a computer-implemented method for shared management of a shared buffer fund 100 of money. For clarity, the method has been depicted in five overviews, FIG. 1A to FIG. 1E.

FIG. 1A depicts the buffer fund 140 with at least one inlet flow 130 of money into the fund 140, and at least one outlet flow 330, 331, 332, 333 of money. The management of the fund 140 is shared between an Issuer 110, a Fund Manager 210 and at least one Purchaser 310, 311, 312, 313 as described below. Each Purchaser 310, 311, 312, 313 makes purchases by payment using virtual identification (ID) devices 340, 341, 342, 343, which may be stored on mobile devices, for example.

During recent years, ID devices have been changing from physical, like a chipcard, to more virtual, such as a software application on a mobile device or a digitized "card. In combination with interaction technology such as NFC, WiFi Direct or Bluetooth, a mobile computer or mobile device, such as a mobile phone, smart watch or tablet, can be used as a virtual ID device to perform identification, authorization, authentication and payment transactions with merchant Point Of Interface (POI) terminals and/or directly on-line. Such software applications include, for example, Apple Pay, Android Pay, and Samsung Pay. The virtual ID device may be implemented by any suitable hardware and/or software. Image based interaction technology may also be used such as bar-codes and/or QR-codes.

The buffer fund 140 is established through the Issuer 110, such as a bank, who authorizes the Fund Manager 210 to manage the buffer fund 140. The buffer fund 140 may be implemented using a suitable bank account. In some cases, this Manager 210 will be a family head, or parent, who manages a family fund, but it may be used by any group of individuals who wish to share funds and also wish to share the management of the fund, for example students sharing an apartment, travelers sharing a trip, colleagues sharing lunches. The fund may also be limited to one purpose, such as paying the costs for a vehicle used by several neighbors or SME-businesses grouping together to purchase raw materials in bulk. The Fund Manager 210 enjoys a high degree of independence from the Issuer 110 due to the authorization by the Issuer 110. The sharing of funds happens over an extended period of time, during which a plurality of payment transactions are initiated.

FIG. 1B depicts some possible settings and limits which the buffer fund 140 may have:
- at least one inlet setting 120 determining an amount for the associated inlet flow 130 of money into the fund 140;
- an inlet limit 125 determining an associated maximum inlet flow 130 of money into the fund 140;
- an outlet setting 320, 321, 322, 323 per Purchaser 310, 311, 312, 313 determining the respective outlet flow 330, 331, 332, 333 of money from the fund 140; and
- an outlet limit 320, 321, 322, 323 for each Purchaser 310, 311, 312, 313 determining the associated maximum outlet flow 330, 331, 332, 333;

Note that each limit may be set to 0, effectively blocking the associated flow, or to an appropriate maximum which is effectively the same as having no limit.

FIG. 1B also depicts the management responsibilities of the Issuer 110. The Issuer 110 authorizes the Fund Manager 210 to manage the buffer fund 140 within agreed settings or parameters. These are, preferably, as few as possible but may include, for example:
- the inlet limit 125; and
- a minimum fund limit 128 determining the minimum amount of money to be present in the buffer fund 140.

For example, the Issuer 110 may determine that the minimum fund limit 128 is greater than or equal to zero. In such a case, the fund 140 may not become overdrawn - the Issuer 110 may also allow negative amounts for a short period of time, or simply charge the Fund Manager 210 a penalty if the fund 140 is negative.

In general, the inlet limit 125 may determine the type of account and facilities to be used for the fund 140. In most cases, the costs to the Fund Manager 210 may be wholly or partially determined by this limit 125.

Although the fund 140 may have many possible settings and limits, most are not determined by the Issuer 110, but independently by the Fund Manager 210. Independent means that the Fund Manager 210 does not need to seek permission or authorization for his actions from the Issuer 110. For example, the Issuer 110 may apply restrictive settings on the group of Purchasers only as a whole, but they may not apply limits on individual Purchasers.

In particular, the Issuer 110 may not apply any restrictive settings which undermine the independence of the Fund Manager 210 to:
- authorize Purchasers 310, 311, 312, 313 to make payments from the buffer fund;
- determine the maximum outlet flow 330, 331, 332, 333 for each Purchaser; and
- issuing one or more virtual ID devices 340, 341, 342, 343 to each Purchaser 310, 311, 312, 313, and
- authorizing each Purchaser 310, 311, 312, 313 to make payments to merchants using these virtual ID devices.

For the buffer fund 140, virtual ID devices 340, 341, 342, 343 allow a more detailed book-keeping and Purchaser management compared to having cash in a jar. They are also straightforward for the Fund Manager 210 to issue independently.

Authorization is not only the right to add and manage Purchasers, but also the right to remove Purchasers or to block certain purchases.

Issuing is not only the right to provide virtual ID devices 340, 341, 342, 343, but also the right to withdraw them or to cancel them.

FIG. 1C and FIG. 1D depict the management responsibilities of the Fund Manager 210, who:
- determines at least one inlet setting 120 to control the money flowing into the fund 140;
- independently authorizes at least one Purchaser 310, 311, 312, 313 to make payments from the fund 140;
- determines the outlet limit 320, 321, 322, 323 for each Purchaser 310, 311, 312, 313 and independently determines the associated maximum outlet flow 330, 331, 332, 333 of money from the fund 140;

- authorized each Purchaser 310, 311, 312, 313 to control their own outlet setting 320, 321, 322, 323;
- independently issuing one or more virtual ID devices 340, 341, 342, 343 to each Purchaser 310, 311, 312, 313;
- independently authorizing each Purchaser 310, 311, 312, 313 to make payments to merchants using their issued one or more virtual ID device 340, 341, 342, 343; and
- balances the inlet setting 120 and the outlet limit 325, 326, 327, 328 for each Purchaser such that the amount of money in the fund 140 for a pre-determined period remains within an upper 142 and lower money setting 144.

The money fund 140 is managed as a buffer fund - i.e. the object is not to save money, but to provide sufficient money to cover the purchases for a predetermined period of time. By controlling the limits on money going out, and the amount of money going in, the manager determines the range of money in the fund during a particular time period. This distinguishes it from a savings fund, where the main goal is to steadily increase the amount of money in the fund in successive time periods.

The Fund Manager 210 may configure and arrange the fund 140 such that no payments at all may be made when the amount of money in the fund 140 is less than or equal to the lower money setting 144. Alternatively, an exception may be made for particular goods or services, such as food, transportation or emergency assistance. Such an exception may be defined as a particular category of goods and/or service. Additionally or alternatively, it may also be defined as one or more particular merchants.

When determining an inlet 120 or outlet setting 320, 321, 322, 323, the most appropriate setting type may be chosen - for example it may be a fixed sum, or an amount per time period - such as per day, month, or year. It may be a linear or non-linear variable amount. It may also be amounts triggered by certain days of the year or certain events.

The upper 142 and lower money setting 144 and the actions of the Fund Manager 210 influence the way the fund 140 is perceived by the Purchasers:
- the whole of the available money for a given period of time may be immediately added to the fund 140. The lower money setting 144 may be set to zero, so the Purchasers view it as Pre-Paid buffer fund 140, being able to make payments as long as there is sufficient money;
- a smaller amount of money may be added to the fund 140 at regular intervals within the selected period of time. When the money in the fund 140 drops below the lower money setting 144, the Fund Manager 210 may increase the inlet flow 120 accordingly. Purchasers view it as a Debit buffer fund 140, being able to make payments as long as there is sufficient money, with a tendency to check more frequently the amount of money left in the fund 140; and
- if the Issuer agrees to a negative minimum fund limit 128, the Purchasers view it as a Credit buffer fund 140, being able to make payments as long as there is sufficient credit.

FIG. 1C depicts the Fund Manager 210 as also being a Purchaser 310 - this is a possibility, but not required for the operation of the fund 140. In that case, the Fund Manager 210 independently authorizes himself as a further Purchaser 310 to make payments from the buffer fund 140. The managers 110, 210, 310, 311, 312, 313 may prefer that the roles are exclusive to reduce the likelihood of fraud. If the fund 140 is used by a family, for example, the Fund Manager 210 will typically also be a Purchaser 310.

FIG. 1E depicts the management responsibilities of each Purchaser 310, 311, 312, 313, who:
- independently control their own outlet setting 320, 321, 322, 323 to determine the money that they each use from the fund 140.

Each Purchaser 310, 311, 312, 313 may control their own outlet setting 320, 321, 322, 323 independently - in other words, they do not need to seek permission or authorization from the Fund Manager 210.

Importantly, the management of the fund is shared with all Purchasers having some responsibility to monitor their own purchases to avoid adversely affecting any of the other Purchasers. It is this shared responsibility which contributes to learning about money.

Typically, when they make a purchase, they momentarily set their outlet setting 320, 321, 322, 323 to the amount of the purchase, after which it is closed, or set to zero. However, more complicated operations are also possible with this implementation - for example, if a monthly subscription is to be paid or recurring costs such as automobile lease , then the setting of each outlet 320, 321, 322, 323 at any point in time may be a combination of automatic, or planned, amounts and spontaneous amounts. This buffer fund 140 implementation makes it possible for more than one Purchaser to simply share recurring costs, such as house rent.

Not depicted in FIG. 1 is the situation where a Purchaser may also be an Earner. Just as with a family jar, each user of the fund may also provide additional money for the fund. The Fund Manager 210 anticipates this by independently authorizing such a Purchaser 310, 311, 312, 313 to be an Earner so they can make payments into the fund 140. The Fund Manager 210 may optionally also determine their maximum inlet flow of money for each Earner into the fund 140. The Fund Manager 210 also allows each Earner to control their inlet setting to determine themselves their contributions to the fund 140.

Each Earner may control their own inlet setting independently - in other words, an Earner does not need to seek permission or authorization from the Fund Manager 210 for making payments.

The Fund Manager 210 may also independently withdraw the authorization to be an Earner, preventing the Earner making future payments into the fund 140.

Earner & Purchaser Roles can be combined and fluctuate between different time periods - a zero inlet limit for an Earner role makes the person just a Purchaser, a zero outlet limit for a Purchaser role makes the person just an Earner. The Fund Manager 210 may also be a Purchaser 310, which means that the Fund Manager 210 may also be authorized as an Earner.

Alternatively, the Fund Manager 210 may just authorize one or more Earners if there is no requirement for that person to also make purchases - this simplifies the management of the fund 140.

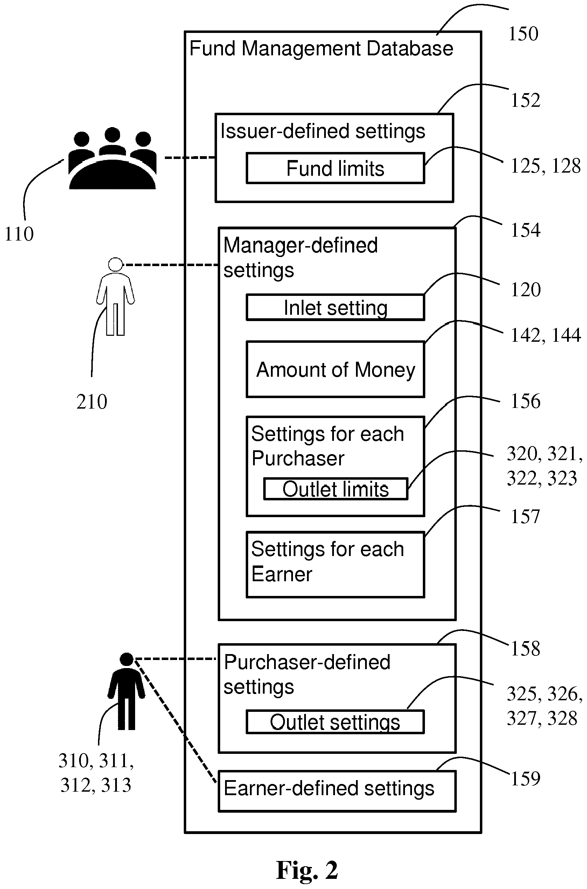

FIG. 2 depicts a schematic view of the contents of a Fund Management Database 150 - this facilitates parallel management by the Issuer 110, Fund Manager 210, Purchaser 310, 311, 312, 313 and Earner.

The database comprises:
- Issuer-defined settings 152, optionally including Fund Limits such as the inlet limit 125 and the minimum fund limit 128;
- Manager-defined settings 154, including at least one inlet setting 120, the upper money setting 142 and the lower money setting 144. Also included are some of the settings for each Purchaser 156, such as their outlet limit 320, 321, 322, 323, and optionally some of the settings for each Earner 157;
- Purchaser-defined settings 158, including the outlet setting 320, 321, 322, 323 for each Purchaser; and
- optionally Earner-defined settings 159, including the inlet setting for each Earner.

The database 150 is configured and arranged, for example using accounts and passwords, such that each manager type only has read/write access to his own settings. Each Purchaser 310, 311, 312, 313 only has read/write access to his own settings and not to those of the other Purchasers 310, 311, 312, 313. If Earners are authorized, each Earner only has read/write access to his own settings and not to those of any other Earners.

The advantages of a virtual, digitized fund are used to optimize record-keeping and fund management. The database 150 is further configured and arranged to provide required data to visualization software to assist the Fund Manager 210 in maintaining an overview. For example, when used by a family, the Fund Manager 210 may wish to track family expenses. Based on this information, the Fund Manager 210 may modify settings as required to take these insights into consideration.

Preferably, each Purchaser is provided with a mobile device application that displays the total amount of money currently in the fund 140, their own defined settings 158 and the possibility to change their defined settings 158 within the application. To help learn about the value of money, it is preferred that the contents of the fund 140 are easily visible on their mobile device. For example, a graphical representation of a gauge may be used.

The Fund Manager 210 is preferably provided with detailed analysis and prediction software as a mobile device application that displays the total amount of money currently in the fund 140, the Manager-defined settings 154, 156, 157 and the possibility to change these settings within the application. Optionally, the Fund Manager 210 is granted read access to the Purchaser 158 and Earner-defined settings 159 to assist in predicting and/or maintaining the amount of money in the fund 140. At the end of a selected period of time, the Manager 210 may get complete views on expenditures, and optionally earnings, from each Purchaser 310, 311, 312, 313 and Earner, as well as the whole expenditure / earnings from all Purchasers 310, 311, 312, 313 and Earners. This information is used to set the limits and settings appropriately for the next time period.

The Fund Manager 210 may optionally set appropriate limits for each Purchaser 310, 311, 312, 313. For example, a combination of whitelists & blacklists such as: approved merchant categories, approved merchants, blacklisted merchant categories, blacklisted merchants, approved goods categories, approved service categories, approved goods, approved services, blacklisted goods categories, blacklisted service categories, blacklisted goods, blacklisted categories, approved merchant locations, blacklisted merchant locations and any meaningful combination.

These limits may be used to make it more difficult for the Purchaser 310, 311, 312, 313 to get access to goods and services which are not appropriate for that Purchaser 310, 311, 312, 313 - for example, movies or computer games classified for older ages, weapons, cigarettes, tobacco, and/or alcohol. They may be set for an individual Purchaser 310, 311, 312, 313 or for all Purchasers 310, 311, 312, 313 as a group policy. These are typically included in a blacklist.

Similarly, these limits may be used to make it always possible for the Purchaser 310, 311, 312, 313 to easily get access to goods and services which may be needed in an emergency - for example, food, transportation, medical assistance, and/or calling credit. They may be set for an individual Purchaser 310, 311, 312, 313 or for all Purchasers 310, 311, 312, 313 as a group policy. These are typically included in a whitelist.

The Fund Manager 210 may also optionally set appropriate limits for each type of setting, such as inlet limits, outlet limits and fund limits: for example, a maximum amount, a maximum amount per time period, a maximum amount per purchase, a maximum amount per location, a maximum amount per merchant category, a maximum amount per merchant, a maximum amount per goods category, a maximum amount per service category, a maximum amount per goods, a maximum amount per service, and any meaningful combination. They may be set for an individual Purchaser 310, 311, 312, 313 or for all Purchasers 310, 311, 312, 313.

Preferably, these limits may be updated, changed or removed at any time by the Fund Manager 210 so that he can ensure that the money in the fund 140 remains between the upper money limit 142 and the lower money limit 144. Some of the Manager 210 tasks may be automated.

The Fund Manager 210 may independently issue one or more virtual identification devices to each Purchaser 310, 311, 312, 313. After that, each Purchaser 310, 311, 312, 313 is free to purchase any products or service without explicit permission from the Fund Manager 210. The only check is against the limits that the Fund Manager 210 has set for that Purchaser 310, 311, 312, 313. One or more Manager-defined settings 154 may be selecting and/or predetermining for checking during payment authorization - this may be a limit for one or more Purchasers 310, 311, 312, 313. During authorization, the payment is checked to see if it is within said one or more Manager-defined settings 156 for the active Purchaser (310, 311, 312, 313). If it is, the payment is authorized. If it is not, the payment is not authorized.

These limits may be may be configured either at network level, or directly configured in the virtual ID device 340, 341, 342, 343 to the Purchaser 310, 311, 312, 313. For example, a black-list and white-list may be configured in a look-up table in the network, or directly in the virtual ID device 340, 341, 342, 343. These limits may be requested and checked by the POI when the active Purchaser 310, 311, 312, 313 initiates a purchase or payment transaction.

Alternatively or additionally, the limits may be directly configured in hardware and/or software in direct communication with virtual ID device 340, 341, 342, 343. For example, if the virtual ID device 340, 341, 342, 343 is comprised in a mobile computer, the limits may be comprised in the same mobile computer in the form of a software application, or as a smartcard readable by NFC or Bluetooth.

The limits may be configured when issuing the virtual ID device 340, 341, 342, 343 to the Purchaser 310, 311, 312, 313. It may be advantageous to further provide hardware and/or software to update the limits if the Manager-defined settings for that Purchaser (156) are changed or modified.

Configuring the Manager-defined settings for each Purchaser 156 directly in the virtual ID device may be more flexible, allowing payments and transactions to be made using the available networks, and not just being restricted to the Issuer's 110 network. This may be particularly useful when travelling.

The virtual ID device 340, 341, 342, 343 to the Purchaser 310, 311, 312, 313 may be identified by a unique Token for use with the applicable transaction and payment network. Such Tokens function in a similar way to a PAN (Primary Account Number) found on payment cards, credit cards, gift cards or to the codes used for topping up cell-phone or online credit.

Note that, in practice, the Fund Manager 210 may need to use facilities provided by the Issuer 110 to ensure the correct selection and/or registration of the Tokens. For example, the Issuer 110 may provide a list of pre-approved Tokens, leaving the Fund Manager 210 to decide independently when and how often to issue a Token to a Purchaser 310, 311, 312, 313. Alternatively or additionally, the Issuer 110 may provide facilities, preferably online, allowing the Fund Manager 210 to independently register and/or activate a particular Token. Alternatively or additionally, the Issuer 110 may provide facilities, preferably online, for generating a Token. If the Token is to be comprised on a mobile computer, the Issuer 110 may provide facilities, allowing the Fund Manager 210 to independently transfer the Token to the mobile computer.

The Fund Manager 210 may independently withdraw and/or deactivate Tokens. If the Token is to be comprised on a mobile computer, the Fund Manager 210 may independently delete the Token from the mobile computer, preventing further use.

Similar to the earlier situation, the Purchaser 310, 311, 312, 313 may need to use facilities provided by the Issuer 110 to ensure a successful transaction and/or payment using the Tokens. The Purchaser 310, 311, 312, 313 may perform transactions independently from the Issuer 110 and the Fund Manager 210 - a transaction is only blocked or refused if one or more of the Manager-defined settings 159 for that Purchaser 310, 311, 312, 313 is not complied with.

Optionally, the Fund Manager 210 may agree with the Issuer 110 that a transaction may be blocked or refused if one or more of the Issuer-defined settings 152 is not complied with. Issuer-defined settings 152 do not distinguish or discriminate between Purchasers 310, 311, 312, 313.

Completion of the transaction and/or payment is relatively quick because of this independence- at the time of the payment, it is not necessary for the Fund Manager 210 to approve or authorize transactions and/or payments.

Although the present invention has been described in connection with specific exemplary embodiments, it should be understood that various changes, substitutions, and alterations apparent to those skilled in the art can be made to the disclosed embodiments without departing from the spirit and scope of the invention as set forth in the appended claims.

## Claims

1. A computer-implemented method for shared management of a shared buffer fund (100) of money, the method comprising:
- establishing the buffer fund (140) through an Issuer (110) having at least one inlet flow (130) of money;
- storing Issuer-defined settings (152) in an electronic fund management database (150), the Issuer being authorized to control the Issuer-defined settings (152);
- the Issuer (110) authorizing a Fund Manager (210) to manage the buffer fund (140) within the Issuer-defined settings (152);
- storing Manager-defined settings (154) in the fund management database (150), the Fund Manager (210) being authorized to control the Manager-defined settings (154), including an inlet setting (120) determining an amount for the at least one inlet flow (130) of money into the buffer fund (140);
- the Fund Manager (210) independently authorizing at least one Purchaser (310, 311, 312, 313) to make payments from the buffer fund (140);
- storing Manager-defined settings (156) in the fund management database (150) including an outlet limit (320, 321, 322, 323) for each Purchaser (310, 311, 312, 313), the Fund Manager (210) independently determining their associated maximum outlet flow (330, 331, 332, 333) of money from the buffer fund (140);
- storing Purchaser-defined settings (158) in the fund management database (150), each Purchaser (310, 311, 312, 313) being authorized by the Fund Manager (210) to control their associated Purchaser-defined settings (158), including an outlet setting (320, 321, 322, 323) per Purchaser (310, 311, 312, 313) determining their respective outlet flow (330, 331, 332, 333) of money from the buffer fund (140);
- the Fund Manager (210) independently issuing one or more virtual identification devices (340, 341, 342, 343) to each Purchaser (310, 311, 312, 313);
- the Fund Manager (210) independently authorizing each Purchaser (310, 311, 312, 313) to make payments using their issued one or more virtual identification device (340, 341, 342, 343) within the Manager-defined settings (154) for that Purchaser (310, 311, 312, 313); and
- the Fund Manager (210) further determining the inlet setting (120) and the outlet limit (325, 326, 327, 328) for each Purchaser (310, 311, 312, 313) such that the amount of money in the buffer fund (140) for a pre-determined period remains within an upper (142) and lower money setting (144).

2. The computer-implemented method according to claim 1, the method further comprising:
- the Fund Manager (210) independently authorizing at least one Purchaser (310, 311, 312, 313) as an Earner to make payments into the buffer fund (140); and
- storing Earner-defined settings in the fund management database (150), each Earner being authorized by the Fund Manager (210) to control their associated Earner-defined settings, including an inlet setting per Earner determining their respective inlet flow of money into the buffer fund (140).

3. The computer-implemented method according to claim 2, the method further comprising:
- storing Manager-defined settings (154) in the fund management database (150) including a further inlet limit per Earner determining their respective maximum inlet flow of money into the buffer fund (140).

4. The computer-implemented method according to claim 1 or claim 2, the method further comprising: the Fund Manager (210) independently authorizing himself as a further Purchaser (310) to make payments from the buffer fund (140).

5. The computer-implemented method according to claim 1 or claim 2, wherein Manager-defined settings (156) in the fund management database (150) further include one or more of the following for each Purchaser: approved merchant categories, approved merchants, blacklisted merchant categories, blacklisted merchants, approved goods categories, approved service categories, approved goods, approved services, blacklisted goods categories, blacklisted service categories, blacklisted goods, blacklisted categories, approved merchant locations, and blacklisted merchant locations.

6. The computer-implemented method according to claim 1 or claim 2, wherein the method further comprises:
- selecting and/or predetermining one or more Manager-defined settings (154) for checking during payment authorization by an active Purchaser (310, 311, 312, 313);
- determining during authorization that the payment is within said one or more Manager-defined settings (156) for the active Purchaser (310, 311, 312, 313); and
- authorizing the payment if it is within said one or more Manager-defined settings (156); or not authorizing the payment if it is not within said one or more Manager-defined settings (156).

7. The computer-implemented method according to claim 6, wherein the method further comprises:
- configuring the one or more Manager-defined settings (154) in the virtual identification devices (340, 341, 342, 343) issued to the active Purchaser (310, 311, 312, 313).

8. The computer-implemented method according to claim 1 or claim 2, wherein the inlet limit, outlet limits and fund limits are one or more of the following: a maximum amount, a maximum amount per time period, a maximum amount per purchase, a maximum amount per location, a maximum amount per merchant category, a maximum amount per merchant, a maximum amount per goods category, a maximum amount per service category, a maximum amount per goods, and a maximum amount per service.

9. The computer-implemented method according to claim 1 or claim 2, wherein the Issuer-defined settings (152) include:
- an inlet limit (125) determining an associated maximum inlet flow (130) of money into the buffer fund (140); and
- a minimum fund limit (128) determining the minimum amount of money to be present in the buffer fund (140) whereby the lower money setting (144) is greater than or equal to the minimum fund limit (128).

10. The computer-implemented method according to claim 9, wherein minimum fund limit (128) is greater than or equal to zero.

11. The computer-implemented method according to claim 1 or claim 2, the method further comprising:
- providing an electronic overview of the buffer fund (140) including one or more of the following: an average amount of money in the buffer fund (140) during a time period, a maximum amount of money in the buffer fund (140) during a time period; a minimum amount of money in the buffer fund (140) during a time period; an average outlet flow per Purchaser, a maximum outlet flow per Purchaser during a time period; and a minimum outlet flow per Purchaser during a time period.

12. The computer-implemented method according to claim 2, the method further comprising:
- providing an electronic overview of the buffer fund (140) including one or more of the following: an average inlet flow per Earner, a maximum inlet flow per Earner during a time period; and a minimum inlet flow per Earner during a time period.

13. The computer-implemented method according to claim 1 or claim 2, wherein at least one of the virtual identification devices (340, 341, 342, 343) is comprised in a mobile computer.

14. The computer-implemented method according to claim 1 or claim 2, wherein the method is configured and arranged to allow the Fund Manager (210) to control the Manager-defined settings (154) using a mobile computer.

15. The computer-implemented method according to claim 2, wherein the method is configured and arranged to allow at least one Purchaser (310, 311, 312, 313) to make payments to merchants using a mobile computer.
